# EUROPEAN PATENT SPECIFICATION

(11) **EP 4 258 514 B1**
(45) Date of publication and mention of the grant of the patent: **25.02.2026**
(21) Application number: 21900458.7
(22) Date of filing: 24.11.2021
(51) Int. Cl.: H02J 13/00, G06Q 50/06

(54) **MANAGEMENT SYSTEM, EDGE DEVICE, AND MANAGEMENT METHOD**
VERWALTUNGSSYSTEM, EDGE-VORRICHTUNG UND VERWALTUNGSVERFAHREN
SYSTÈME DE GESTION, DISPOSITIF PÉRIPHÉRIQUE ET PROCÉDÉ DE GESTION

(30) Priority: 01.12.2020 JP 2020199576
(43) Date of publication of application: 11.10.2023
(73) Proprietor: Daikin Industries, Ltd., Osaka-shi, Osaka 530-0001 (JP)
(72) Inventor: NAKATSUKA, Go, Osaka-shi, Osaka 530-8323 (JP); NOHARA, Kenta, Osaka-shi, Osaka 530-8323 (JP)
(74) Representative: Goddar, Heinz J.
(86) International application number: PCT/JP2021/042929
(87) International publication number: WO 2022/118703

(56) References cited:
- WO-A1-2017/047721
- JP-A- 2003 084 018
- JP-A- 2016 093 098
- JP-A- 2016 093 098
- JP-A- 2016 184 823
- JP-A- 2018 165 859
- ANONYMOUS: "TEPCO : About save electricity | Introducing the Demand Control System", 30 June 2011 (2011-06-30), pages 1 - 3, XP093247476, Retrieved from the Internet <URL:https://www.tepco.co.jp/en/setsuden/business/demand-e.html>
- MOCNEJ JOZEF ET AL: "Impact of Edge Computing Paradigm on Energy Consumption in IoT", IFAC-PAPERSONLINE, vol. 51, no. 6, 1 January 2018 (2018-01-01), DE, pages 162 - 167, XP093247480, ISSN: 2405-8963, Retrieved from the Internet <URL:https://pdf.sciencedirectassets.com/313346/1-s2.0-S2405896318X00111/1-s2.0-S2405896318308917/main.pdf?hash=e87aa2b34fde3d123dacbf844c597cc3240f0314aa13a1a67e420cb86720f0f1&host=68042c943591013ac2b2430a89b270f6af2c76d8dfd086a07176afe7c76c2c61&pii=S2405896318308917&tid=spdf-44e4e5cd-f276-48b1-a994-ef9> DOI: 10.1016/j.ifacol.2018.07.147

## Description

### [Technical Field]

The present disclosure relates to a management system, an edge device, and a management method.

### [Background Art]

In general, in a management system that manages power consumption, such as a demand control system, information indicating power consumption is transmitted and received between an edge device and a server device so that the user can view the fluctuation status of power consumption. Specifically, the management system is configured such that the user can view information according to the user's needs, for example, from the fluctuation status of power consumption at short intervals of approximately 10 seconds to the fluctuation status of power consumption at relatively long intervals of approximately 30 minutes.

### [Citation List]

### [Patent Documents]

[Patent Document 1]
   International Publication No. 2015/128907
[Patent Document 2]
   Japanese Unexamined Patent Application Publication No. 2010-71505

Further relevant prior art publications:
JP2016093098A; JP2018165859A; "Impact of Edge Computing Paradigm on Energy Consumption in IoT"(2018 - Mocnej Jozef, Miškuf Martin, Papcun Peter, Zolotová Iveta).

### [Summary of Invention]

### [Technical Problem]

However, in the case of the management system described above, the communication amount between the edge device and the server device increases, resulting in communication costs.

The purpose of the present disclosure is to reduce the communication amount between an edge device and a server device in a management system that manages power consumption.

### [Solution to Problem]

The invention is defined in the claims. A management system according to a first aspect of the present disclosure is
a management system configured to manage power consumption, including:
an edge device; and
a server device, wherein
the edge device includes:
   a first storage unit configured to store, at every predetermined time interval, first power information based on a power consumption amount from when a target section starts;
   a second storage unit configured to store, when the target section ends, second power information based on a power consumption amount from when the target section starts to when the target section ends; and
   a first control unit configured to transmit the first power information in response to receiving a request from the server device, and to transmit the second power information at a predetermined timing.

According to the first aspect of the present disclosure, the transmission frequency of the first power information can be reduced, and in a management system that manages power consumption, the communication amount between the edge device and the server device can be reduced.

Further, the second aspect of the present disclosure is the management system described in the first aspect, wherein
the server device includes:
a second control unit configured to transmit the request, in response to determining that a display instruction to display the first power information is given.

Further, the third aspect of the present disclosure is the management system described in the second aspect, wherein the request transmitted by the second control unit includes information to cause the first power information to be continuously transmitted for a predetermined time period.

Further, the fourth aspect of the present disclosure is the management system described in the second aspect, wherein the second control unit is configured to provide a first display screen configured to display the first power information of the target section, and a second display screen configured to display the second power information of a past predetermined time period.

Further, the fifth aspect of the present disclosure is the management system described in the first aspect, wherein the first storage unit deletes the first power information every time the target section ends.

Further, the sixth aspect of the present disclosure is the management system described in the fifth aspect, wherein
the first control unit transmits, to the server device, all of the first power information stored in the first storage unit, in response to determining that the request is received, and
the first control unit transmits, to the server device, all of the first power information stored in the first storage unit, every time a predetermined number of pieces of the first power information are newly stored, after the request is received.

Further, the seventh aspect of the present disclosure is the management system described in the first aspect, wherein the first control unit transmits the second power information when the target section ends.

Further, the eighth aspect of the present disclosure is the management system described in the sixth aspect, wherein the server device includes:
a third storage unit configured to store, by overwriting the first power information that has been stored, all of the first power information transmitted by the first control unit every time the predetermined number of pieces of the first power information are newly stored in the first storage unit.

Further, the ninth aspect of the present disclosure is the management system described in the first aspect, wherein
the second storage unit stores the second power information for a predetermined time period in response to determining that the first control unit is unable to transmit the second power information, and
the second storage unit deletes the second power information in response to determining that the first control unit has completed transmitting the second power information.

Further, an edge device in the tenth aspect of the present disclosure is an edge device communicably connected to a server device in a management system configured to manage power consumption, the edge device including:
a first storage unit configured to store, at every predetermined time interval, first power information based on a power consumption amount from when a target section starts;
a second storage unit configured to store, when the target section ends, second power information based on a power consumption amount from when the target section starts to when the target section ends; and
a control unit configured to transmit the first power information in response to receiving a request from the server device, and to transmit the second power information at a predetermined timing.

According to the tenth aspect of the present disclosure, the transmission frequency of the first power information can be reduced, and in a management system that manages power consumption, the communication amount between the edge device and the server device can be reduced.

Further, a control method in the eleventh aspect of the present disclosure is a management method performed in a management system configured to manage power consumption, the management system including an edge device and a server device, the management method including:
a first storage step of storing, in a first storage unit at every predetermined time interval, first power information based on a power consumption amount from when a target section starts;
a second storage step of storing, in a second storing unit when the target section ends, second power information based on a power consumption amount from when the target section starts to when the target section ends; and
a control step of transmitting the first power information in response to receiving a request from the server device, and to transmit the second power information at a predetermined timing.

According to the eleventh aspect of the present disclosure, the transmission frequency of the first power information can be reduced, and in a management system that manages power consumption, the communication amount between the edge device and the server device can be reduced.

### [Brief Description of Drawings]

[FIG. 1] FIG. 1 illustrates an example of the system configuration of a management system.
[FIG. 2] FIG. 2 illustrates an example of the hardware configuration of an edge device and a server device.
[FIG. 3] FIG. 3 illustrates an example of a sequence diagram illustrating the flow of power information transmission control processing when no transmission request for first power information is received.
[FIG. 4] FIG. 4 illustrates an example of the operation of each unit performing power information transmission control processing when no transmission request for first power information is received.
[FIG. 5] FIG. 5 illustrates an example of a sequence diagram illustrating the flow of power information display control processing when a demand graph display instruction is given and a display example of a demand graph.
[FIG. 6] FIG. 6 illustrates a sequence diagram illustrating the flow of power information transmission control processing when a transmission request for first power information is received and power information display control processing when a display instruction for a current status graph is given, and a display example of a current status graph.
[FIG. 7] FIG. 7 illustrates an operation example of each unit of the power information transmission control processing when a transmission request for first power information is received.
[FIG. 8] FIG. 8 is an example of a flow chart illustrating the flow of power information transmission control processing by the edge device.
[FIG. 9] FIG. 9 is an example of a flow chart illustrating the flow of power information display control processing by the server device.

### [Description of Embodiments]

Each embodiment will be described below with reference to the accompanying drawings. In the present specification and drawings, with respect to elements having substantially the same functional configuration, duplicate descriptions are omitted by applying the same symbols.

### [First embodiment]

### <System configuration of management system>

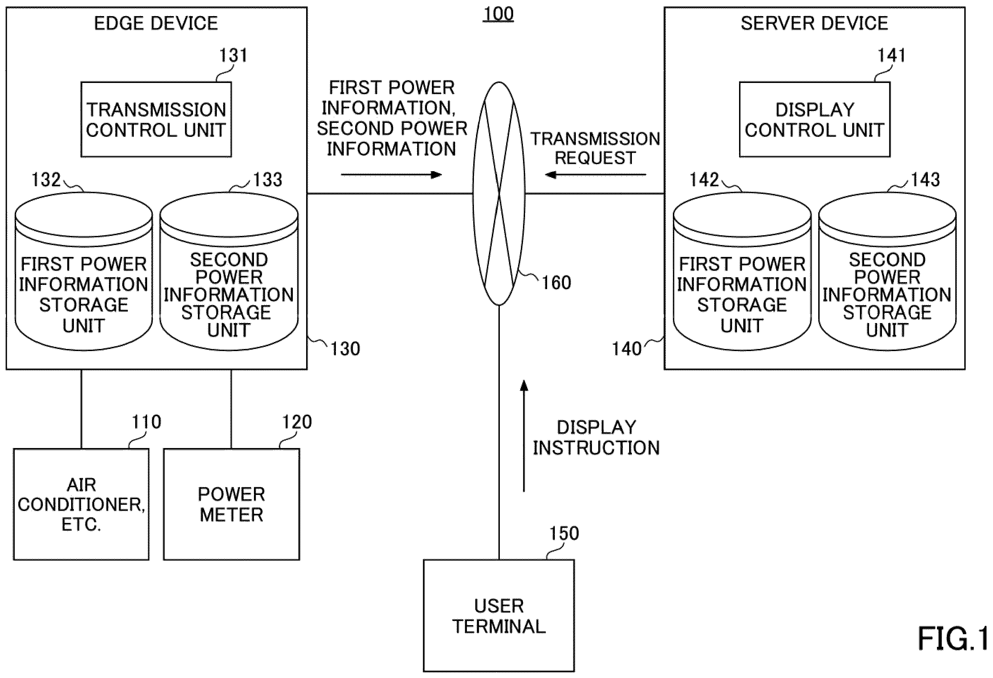

First, the system configuration of the management system is described. FIG. 1 illustrates an example of the system configuration of a management system.

A management system 100 is a system for managing power consumption, such as a demand control system, and executes "demand control processing", "power information transmission control processing", and "power information display control processing". In the following, however, power information transmission control processing and power information display control processing are mainly described, and the description of demand control processing is omitted.

As illustrated in FIG. 1, a management system 100 includes an air conditioner, etc. 110, a power meter 120, an edge device 130, a server device 140, and a user terminal 150. In the management system 100, the edge device 130 and the server device 140, and the server device 140 and the user terminal 150 are respectively communicably connected to each other through a network 160.

The air conditioner, etc. 110 refers to all devices that consume electric power, and includes air conditioners, lighting, etc. The operation of the air conditioner, etc. 110 is controlled by the edge device 130.

The power meter 120 is an electrical device that accumulates and measures the power consumed by the air conditioner, etc. 110, and outputs the measured power amount to the edge device 130.

A transmission control program is installed in the edge device 130, and when the program is executed, the edge device 130 functions as a transmission control unit 131 (an example of the first control unit). The transmission control unit 131 acquires the output of the power meter 120, and calculates, stores, and transmits power consumption.

Specifically, the transmission control unit 131 acquires the measured power amount by using the power meter 120.

Further, the transmission control unit 131 calculates the power consumption amount after the start of the target section of the demand control at every predetermined time interval (for example, every 10 seconds), converts the power consumption amount into an average power consumption per 30 minutes (first power information), and stores the average power consumption in a first power information storage unit 132 (an example of the first storage unit).

The transmission control unit 131 calculates the power consumption amount from the start to the end of the target section of demand control (for example, for 30 minutes), converts the power consumption amount into average power consumption per 30 minutes (second power information), and stores the average power consumption in a second power information storage unit 133 (an example of the second storage unit).

When the transmission control unit 131 receives a transmission request from the server device 140 via the network 160, the transmission control unit 131 transmits all the first power information stored in the first power information storage unit 132 at that time to the server device 140 via the network 160.

Note that the transmission request includes information that causes the first power information to be transmitted continuously for a certain time period. Therefore, after receiving the transmission request from the server device 140, the transmission control unit 131 transmits all the first power information to the server device 140 each time a predetermined number of pieces (for example, six pieces) of the first power information are stored in the first power information storage unit 132 during the certain time period.

Further, the transmission control unit 131 transmits the second power information stored in the second power information storage unit 133 to the server device 140 via the network 160 at the end of the target section of the demand control.

The server device 140 provides the user terminal 150 with the first power information and second power information transmitted from the edge device 130 via the network 160.

A display control program is installed in the server device 140, and when the program is executed, the server device 140 functions as a display control unit 141 (an example of a second control unit).

The display control unit 141 acquires the second power information transmitted from the edge device 130 each time the target section ends, and stores the second power information in the second power information storage unit 143.

Further, the display control unit 141 accepts login from the user terminal 150, and when there is a display instruction about the fluctuation status of power consumption from the user terminal 150, the display control unit 141 provides a display screen including a graph illustrating the fluctuation status of power consumption to the user terminal 150. The display control unit 141 can display a display screen including each of the following two types of graphs.

As the first graph, a graph displaying the fluctuation status of the power consumption in the current target section at short time intervals (a graph based on first power information; hereafter referred to as "current status graph"), and as the second graph, a graph displaying the fluctuation status of the power consumption in each target section in a past fixed period (a graph based on the second power information; hereafter referred to as "demand graph"), can be displayed on the display screen.

The display control unit 141 transmits a transmission request for the first power information to the edge device 130 via the network 160 when there is an instruction to display the current status graph. Accordingly, the display control unit 141 starts receiving the first power information transmitted from the edge device 130, stores the first power information in the first power information storage unit 142, and provides the current status graph to the user terminal 150.

When a display instruction for a demand graph is given, the display control unit 141 reads the second power information stored in a past certain time period from the second power information storage unit 143, and provides a demand graph to the user terminal 150.

The user terminal 150 is a terminal that displays a display screen including the graph provided by the server device 140. The user of the user terminal 150 can view the current status graph or the demand graph by logging in to the server device 140 and inputting a display instruction.

Thus, in the management system 100 according to the present embodiment, the first power information and the second power information are transmitted and received between the edge device 130 and the server device 140. Among these, the second power information is transmitted from the edge device 130 to the server device 140 each time the target section ends, regardless of whether there is a display instruction from the user terminal 150. On the other hand, the first power information is transmitted from the edge device 130 to the server device 140 when the server device 140 transmits a transmission request for the first power information to the edge device 130 in accordance with a display instruction for the current status graph from the user terminal 150.

Thus, according to the management system 100 according to the present embodiment, the frequency of transmitting the first power information can be reduced compared with a conventional management method in which the first power information is transmitted and received between the edge device and the server device regardless of whether a display instruction for a current status graph is given or not. As a result, according to the management system 100 according to the present embodiment, the communication amount between the edge device and the server device can be reduced.

### <Hardware configuration of edge device and server device>

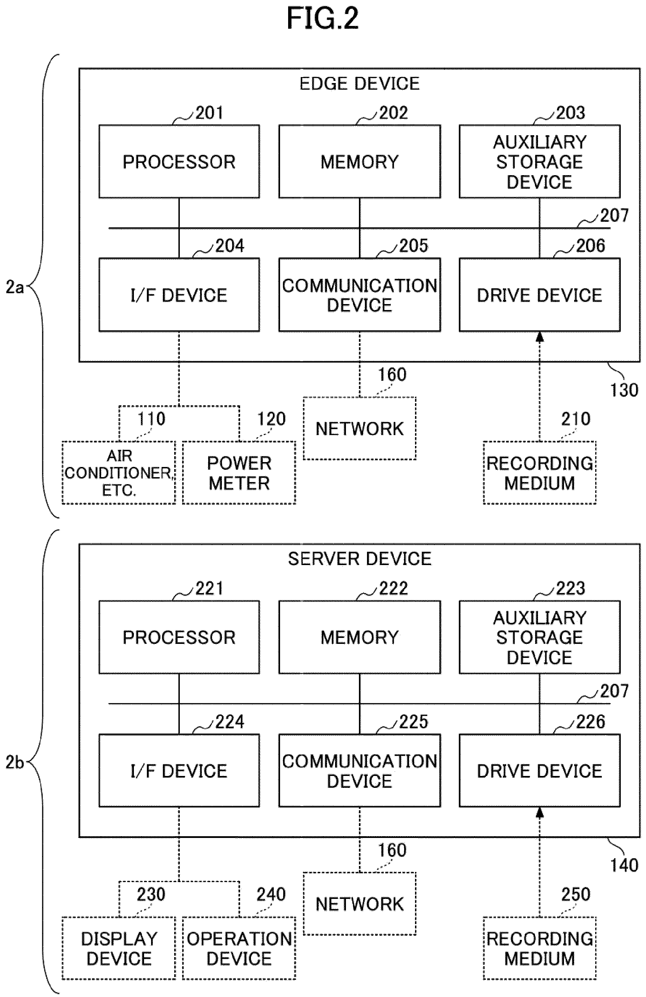

Next, the hardware configuration of the edge device 130 and the server device 140 will be described. FIG. 2 illustrates an example of the hardware configuration of the edge device and the server device. In FIG. 2, 2a illustrates an example of the hardware configuration of the edge device.

As illustrated in 2a of FIG. 2, the edge device 130 includes a processor 201, a memory 202, an auxiliary storage device 203, an I/F (Interface) device 204, a communication device 205, and a drive device 206. Each of the pieces of hardware of the edge device 130 are connected to each other via a bus 207.

The processor 201 includes various computing devices such as a CPU (Central Processing Unit). The processor 201 loads various programs (for example, a transmission control program, etc.) into the memory 202 and executes the programs.

The memory 202 includes a main storage device such as a ROM (Read Only Memory) and a RAM (Random Access Memory). The processor 201 and the memory 202 form what is referred to as a computer, and when the processor 201 executes various programs loaded in the memory 202, the computer implements the above transmission control unit 131.

The auxiliary storage device 203 stores various programs and various kinds of data used when various programs are executed by the processor 201. The auxiliary storage device 203 implements, for example, the first power information storage unit 132 and the second power information storage unit 133.

The I/F device 204 is a connecting device that connects the air conditioner, etc. 110 and the power meter 120, which are examples of external devices, to the edge device 130.

The communication device 205 is a communication device for communicating with the server device 140 via the network 160.

The drive device 206 is a device for setting a recording medium 210. The recording medium 210 here includes a medium for recording information optically, electrically, or magnetically, such as a CD-ROM, a flexible disk, a magneto-optical disk, etc. The recording medium 210 may also include a semiconductor memory, etc., for electrically recording information, such as a ROM, a flash memory, etc.

Various programs installed in the auxiliary storage device 203 are installed, for example, when the distributed recording medium 210 is set in the drive device 206 and various programs recorded in the recording medium 210 are read by the drive device 206. Alternatively, various programs installed in the auxiliary storage device 203 may be installed by being downloaded from the network 160 via the communication device 205.

On the other hand, in FIG. 2, 2b illustrates an example of the hardware configuration of the server device 140. The hardware configuration of the server device 140 is almost the same as that of the edge device 130, and, therefore, the differences from the hardware configuration of the edge device 130 will be mainly described here.

A processor 221 loads various programs (for example, a display control program, etc.) into a memory 222 and executes the programs.

An auxiliary storage device 223 implements, for example, the first power information storage unit 142 and the second power information storage unit 143.

The I/F device 224 is a connecting device that connects a display device 230 and an operation device 240, which are examples of external devices, to the server device 140. The display device 230 displays the internal state of the server device 140. The operation device 240 is used when the manager of the server device 140 inputs various instructions to the server device 140.

A communication device 225 is a communication device for communicating with the edge device 130 and the user terminal 150 via the network 160.

### <Flow of power information transmission control processing>

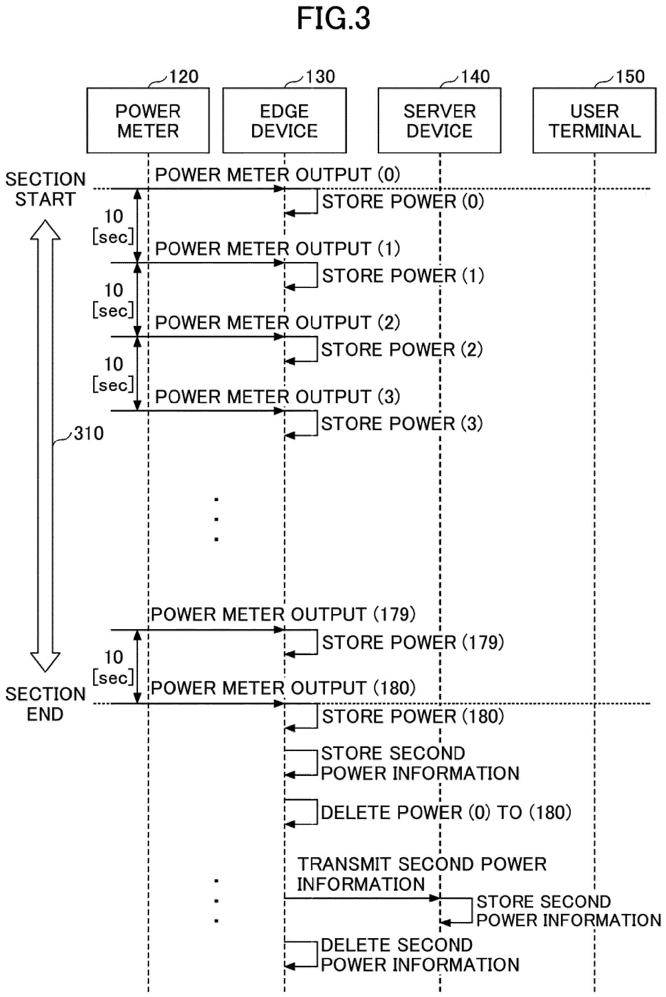

Next, the flow of power information transmission control processing when a transmission request for the first power information is not received will be described. FIG. 3 is an example of a sequence diagram illustrating the flow of power information transmission control processing when a transmission request for the first power information is not received.

In FIG. 3, an arrow 310 indicates the target section of demand control. In the case of FIG. 3, the power meter 120 transmits the output of the power meter to the edge device 130 every 10 [sec] from the start to the end of the target section of demand control. The target section of demand control is assumed to start at the same time as the end of the previous target section, and the example in FIG. 3 illustrates one target section among the target sections.

As illustrated in FIG. 3, the output of the power meter 120 at the start of the target section of demand control is denoted as "power meter output (0)" in the present embodiment as the 0th output. Further, the output of the power meter 120 after 10 [sec] from the start of the target section of demand control is denoted as "power meter output (1)" in the present embodiment as the first output. In the present embodiment, it is assumed that the target section of demand control is 30 minutes. Therefore, the output of the power meter 120 at the end of the target section of demand control becomes the 180th output and is expressed as "power meter output (180)".

Further, as illustrated in FIG. **3****,** the edge device 130 receives the power meter output transmitted from the power meter 120 every 10 [sec]. Further, the edge device 130 calculates the power consumption amount ([kWh]) from the start of the target section, based on the received power meter output and converts the power consumption into an average power consumption ([kW]) per 30 minutes to calculate the first power information. Further, the edge device 130 stores the calculated first power information in the first power information storage unit 132.

As illustrated in FIG. 3, in the present embodiment, the first power information calculated based on the power meter output (0) is expressed as "power (0)". Further, the first power information calculated based on the power meter output (1) is expressed as "power (1)". Thereafter, the first power information is expressed in a similar manner, and the first power information calculated based on the power meter output (180) is expressed as "power (180)".

As illustrated in FIG. 3, when the target section of demand control is ended and the power (180) is stored in the first power information storage unit 132, the next target section is started as described above.

At this time, in parallel, the edge device 130 calculates the power consumption amount ([kWh]) from the start to the end of the target section and converts the power consumption into the average power consumption ([kW]) per 30 minutes to calculate the second power information. Further, the edge device 130 stores the calculated second power information in the second power information storage unit 133. The second power information will have the same value as the power (180).

As illustrated in FIG. 3, in the edge device 130, all of the first power information (power (0) to power (180)) stored in the first power information storage unit 132 is deleted. Further, as illustrated in FIG. 3, in the edge device 130, the second power information stored in the second power information storage unit 133 is transmitted to the server device 140 via the network 160. Further, as illustrated in FIG. 3, the server device 140 stores the second power information transmitted from the edge device 130 in the second power information storage unit 143.

Further, as illustrated in FIG. 3, when the transmission of the second power information to the server device 140 is completed in the edge device 130, the second power information stored in the second power information storage unit 133 is deleted. When the transmission of the second power information to the server device 140 fails due to a communication failure or the like, the edge device 130 does not delete the second power information stored in the second power information storage unit 133 until the communication failure is recovered and the transmission of the second power information is completed. Then, at the time point when the transmission of the second power information is completed, the edge device 130 deletes the second power information stored in the second power information storage unit 133.

However, the timing to delete the second power information is not limited to the above. For example, regardless of whether the transmission of the second power information has been completed or not, the second power information may be stored in the second power information storage unit 133 for a predetermined time period (for example, stored for six months), and then the second power information may be deleted after the lapse of the predetermined time period.

### <Operation example of each unit that executes power information transmission control processing>

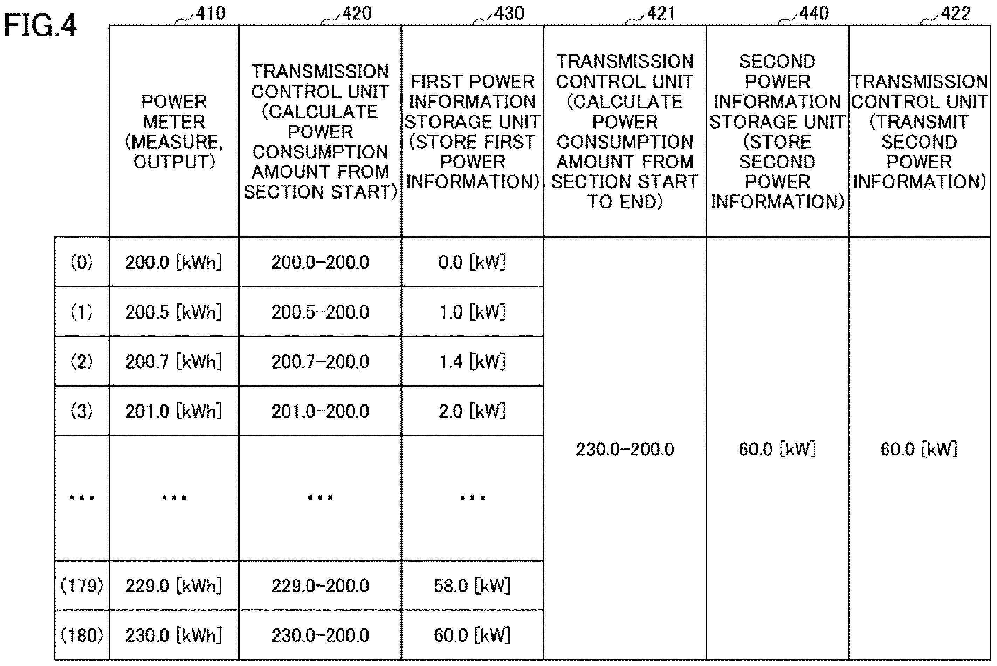

Next, an operation example of each unit (the power meter 120, the transmission control unit 131, the first power information storage unit 132, the second power information storage unit 133) that executes power information transmission control processing when no transmission request for first power information is received, will be described. FIG. 4 illustrates an operation example of each unit that executes power information transmission control processing when no transmission request for first power information is received.

In FIG. 4, a reference numeral 410 indicates a specific example of the output value measured and output by the power meter 120. The example in FIG. 4 indicates that the power meter output (0) = 200.0 [kWh], the power meter output (1) = 200.5 [kWh], the power meter output (2) = 200.7 [kWh], and the power meter output (3) = 201.0 [kWh]. Further, the example in FIG. 4 indicates that the power meter output (179) = 229.0 [kWh] and the power meter output (180) = 230.0 [kWh].

In FIG. 4, a reference numeral 420 indicates an example of calculation of the power consumption amount after the target section of demand control starts, which is calculated by the transmission control unit 131.

As illustrated in the example in FIG. 4, the power consumption amount after the target section starts = 200.0 - 200.0 = 0 [kWh] is calculated based on the power meter output (0). Further, as illustrated in the example in FIG. 4, the power consumption amount after the target section starts = 200.5 - 200.0 = 0.5 [kWh] is calculated based on the power meter output (1). Further, as illustrated in the example in FIG. 4, the power consumption amount after the target section starts = 200.7 - 200.0 = 0.7 [kWh] is calculated based on the power meter output (2). Further, as illustrated in the example in FIG. 4, the power consumption amount after the target section starts = 201.0 - 200.0 = 1.0 [kWh] is calculated based on the power meter output (3). Further, as illustrated in the example in FIG. 4, the power consumption amount after the target section starts = 229.0 - 200.0 = 29 [kWh] is calculated based on the power meter output (179). Further, as illustrated in the example in FIG. 4, the power consumption amount after the target section starts = 230.0 - 200.0 = 30 [kWh] is calculated based on the power meter output (180).

Further, in FIG. 4, the reference numeral 430 indicates a specific example of the value of the average power consumption per 30 minutes (first power information) stored by the first power information storage unit 132. As illustrated in the example in FIG. 4, the transmission control unit 131 converts the power consumption amount after the target section starts into an average power consumption per 30 minutes by doubling the power consumption amount. Accordingly, the power (0) = 0.0 [kW], the power (1) = 1.0 [kW], the power (2) = 1.4 [kW], and the power (3) = 2.0 [kW] are sequentially stored in the first power information storage unit 132 every 10 [sec]. Further, as illustrated in the example of FIG. 4, the power (179) = 58.0 [kW] and the power (180) = 60.0 [kW] are stored in the first power information storage unit 132.

Further, in FIG. 4, a reference numeral 421 indicates an example of calculation of the power consumption amount from the start to the end of the target section of demand control by the transmission control unit 131. As illustrated in the example in FIG. 4, the power consumption amount from the start to the end of the target section = 230.0 - 200.0 = 30 [kWh] is calculated.

In FIG. 4, the reference numeral 440 indicates a specific example of the value of the average power consumption per 30 minutes (second power information) stored by the second power information storage unit 133. As illustrated in the example in FIG. 4, the transmission control unit 131 converts the power consumption amount from the start to the end of the target section to the average power consumption per 30 minutes by doubling the power consumption amount. As a result, the second power information = 60.0 [kW] is stored in the second power information storage unit 133 at the end of the target section.

Further, in FIG. 4, the reference numeral 422 illustrates a specific example of the value of the second power information transmitted to the server device 140 by the transmission control unit 131. As illustrated in the example in FIG. 4, the transmission control unit 131 transmits the second power information = 60.0 kW to the server device 140 at the end of the target section.

### <Flow of power information display control processing>

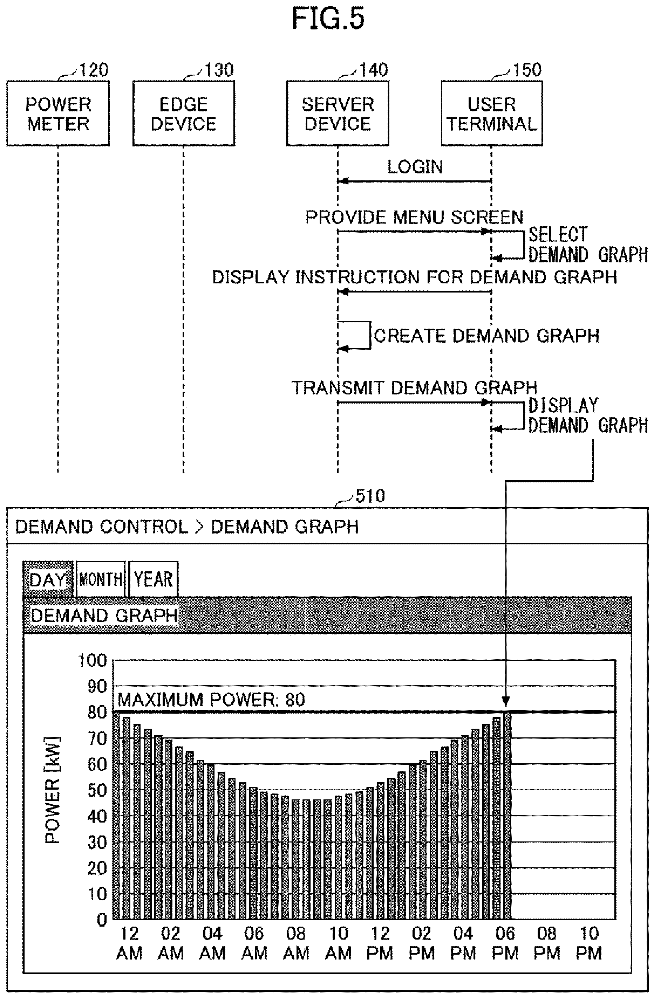

Next, the flow of power information display control processing when a demand graph display instruction is given is explained. FIG. 5 is a diagram illustrating an example of a sequence diagram illustrating the flow of power information display control processing when a demand graph display instruction is given, and a display example of a demand graph.

Although omitted in FIG. 5, in the management system 100, power information display control processing is executed in parallel with the above power information transmission control processing (for example, FIG. 4).

As illustrated in FIG. 5, when a user logs in to the server device 140 through the user terminal 150, the server device 140 provides a menu screen (not illustrated) to the user terminal 150. Note that the menu screen provided by the server device 140 includes an option to select at least either a demand graph or a current status graph. When a demand graph is selected, a graph creation period is also selected. A graph creation period is a period from which a demand graph is displayed, and in the present embodiment, one of a demand graph of the past day, a demand graph of the past month, or a demand graph of the past year is selected.

Here, it is assumed that the user of the user terminal 150 selects a demand graph and selects the past day as the graph creation period. In this case, the user terminal 150 transmits a display instruction for a demand graph of graph creation period = the past day to the server device 140.

When the server device 140 receives an instruction to display a demand graph of graph creation period = the past day, the server device 140 reads the second power information of the past day from the second power information storage unit 143 and creates a demand graph.

Further, the server device 140 transmits the created demand graph to the user terminal 150. Accordingly, the user terminal 150 displays a second display screen 510 including the demand graph. In FIG. 5, the second display screen 510 is a demand graph illustrating second power information of the past day, with the horizontal axis representing the time and the vertical axis representing second power information, respectively.

### <Flow of power information transmission control processing and power information display control processing>

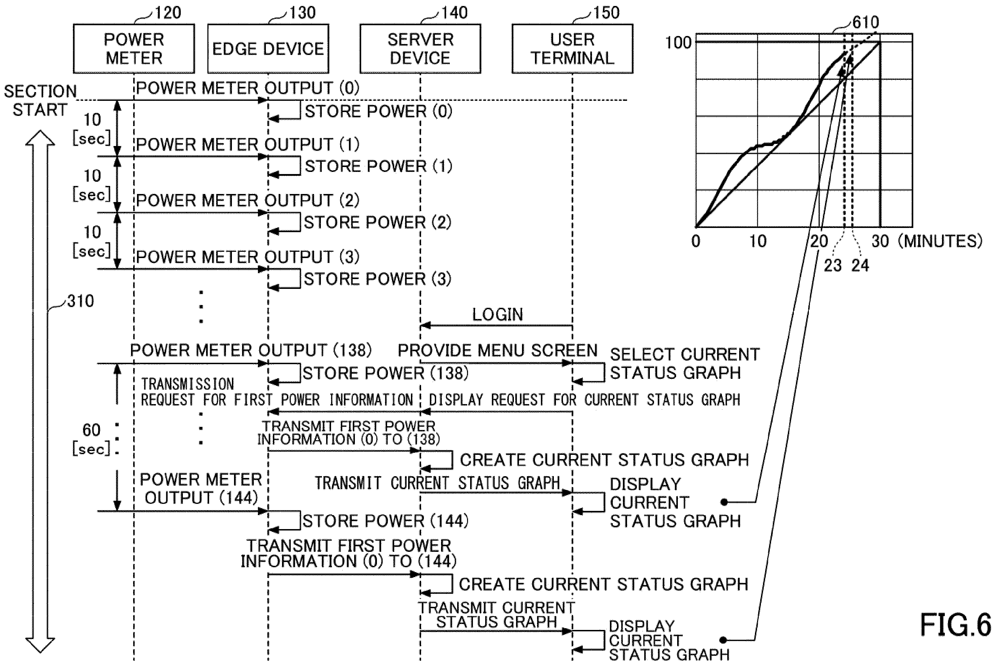

Next, the flow of power information transmission control processing when a transmission request for the first power information is received and power information display control processing when a display instruction for a current status graph is given, are explained. FIG. 6 is a sequence diagram illustrating the flow of power information transmission control processing when a transmission request for the first power information is received and power information display control processing when a display instruction for a current status graph is given, and a diagram illustrating a display example of a current status graph. In FIG. **6****,** for convenience of explanation, among the power information transmission control processing, the processing to transmit the second power information is omitted and only the processing to transmit the first power information is illustrated.

As illustrated in FIG. 6, when a user logs in to the server device 140 through the user terminal 150, the server device 140 provides a menu screen (not illustrated) to the user terminal 150. Note that the menu screen provided by the server device 140 includes an option to select at least either a demand graph or a current status graph.

Here, it is assumed that the user of the user terminal 150 selects a current status graph. In this case, the user terminal 150 transmits a display instruction for the current status graph to the server device 140.

Upon receiving a display instruction for a current status graph, the server device 140 transmits a transmission request for the first power information to the edge device 130.

At this time, it is assumed that this is immediately after the edge device 130 has received the power meter output (138) from the power meter 120 and has stored the power (138) calculated based on the power meter output (138) in the first power information storage unit 132.

In this case, the edge device 130 transmits all of the first power information (power (0) to power (138)) stored in the first power information storage unit 132 at this time to the server device 140 as the first power information (0 to 138).

Upon receiving the first power information (0 to 138), the server device 140 stores the first power information (0 to 138) in the first power information storage unit 142 (third storage unit), creates a current status graph, and transmits the created current status graph to the user terminal 150. Accordingly, the user terminal 150 displays the current status graph on a first display screen 610.

In FIG. 6, the current status graph displayed on the first display screen 610 illustrates the fluctuation status of the power consumption (value converted to the average power consumption per 30 minutes) from the start of the target section until 23 minutes have passed from the start of the target section, with the power consumption at the start of the target section (value converted to the average power consumption per 30 minutes) set to zero.

Note that in parallel with transmitting the first power information (0 to 138) to the server device 140, the edge device 130 repeats receiving the power meter output from the power meter 120, calculating the first power information, and storing the first power information in the first power information storage unit 132 every 10 [sec].

Then, in the edge device 130, after transmitting the first power information (0 to 138) to the server device 140 and determining that a predetermined number of pieces of the first power information have been stored in the first power information storage unit 132, all the first power information stored in the first power information storage unit 132 at that time is transmitted.

In the present embodiment, it is assumed that predetermined number = 6. Therefore, the edge device 130 receives the power meter output (144) from the power meter 120, stores the power (144) calculated based on the power meter output (144) in the first power information storage unit 132, and transmits the first power information (0 to 144) to the server device 140.

The server device 140 that has received the first power information (0 to 144) overwrites and stores the first power information (0 to 144) in the first power information storage unit 142, creates a current status graph, and transmits the created current status graph to the user terminal 150. Thus, the current status graph is displayed on the first display screen 610 of the user terminal 150.

The server device 140 receives and stores the first power information only when a transmission request for the first power information is transmitted, and, therefore, the first power information is not stored when a transmission request for the first power information is not transmitted. That is, regardless of whether a transmission request for the first power information is transmitted, the amount of information stored in the server device 140 can be reduced compared with the conventional management method in which the first power information is received. Further, the server device 140 overwrites and stores all the first power information transmitted from the edge device 130 each time a predetermined number pieces of first power information are stored in the first power information storage unit 132, and, therefore, the amount of information to be stored can be minimized.

Returning to the description of FIG. 6; in FIG. **6****,** the current status graph displayed on the first display screen 610 is a graph illustrating the fluctuation status of the power consumption (value converted to the average power consumption per 30 minutes) from the start of the target section until 24 minutes have elapsed from the start of the target section, with the power consumption at the start of the target section (value converted to the average power consumption per 30 minutes) being zero. Thus, the current status graph in which the fluctuation status of the power consumption per 10 [sec] (value converted to the average power consumption per 30 minutes) is updated every minute is displayed on the first display screen 610 of the user terminal 150.

### <Operation example of each unit during power information transmission control processing>

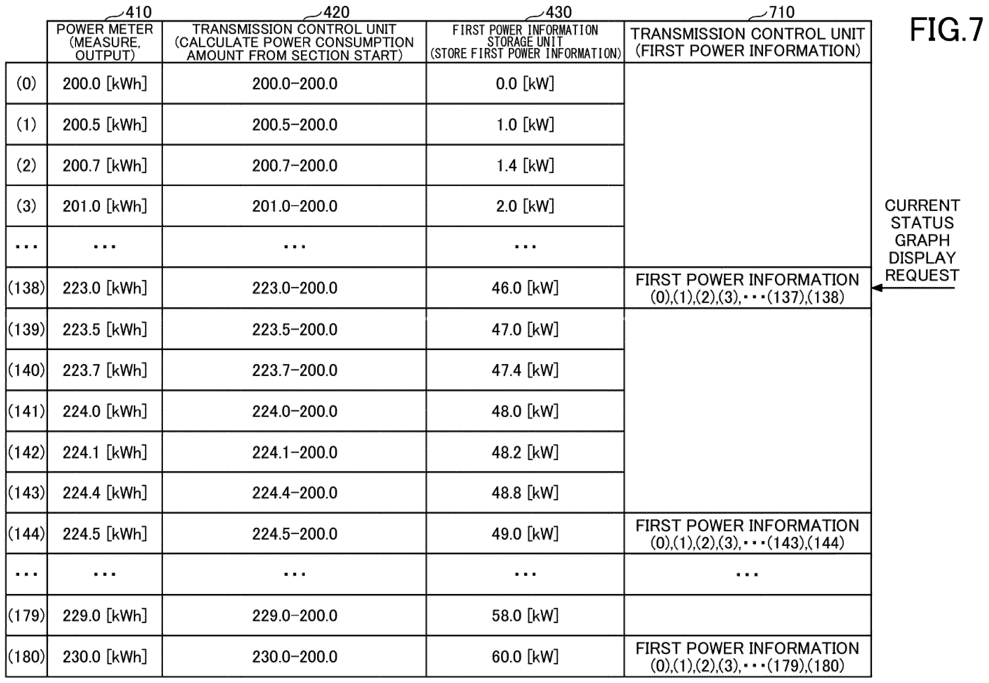

Next, the operation of each unit (the power meter 120, the transmission control unit 131, the first power information storage unit 132) of the power information transmission control processing when a transmission request for the first power information is received will be described. FIG. 7 illustrates an example of the operation of each unit of the power information transmission control processing when a transmission request for the first power information is received. Again, however, among the power information transmission control processing, the processing for transmitting the second power information is omitted, and only the example of the operation of each unit of the processing for transmitting the first power information is illustrated.

In FIG. 7, the reference numeral 410 indicates a specific example of the output value measured and output by the power meter 120. The reference numeral 410 has already been explained in FIG. 4, and, therefore, the explanation thereof is omitted here.

Similarly, in FIG. 7, the reference numeral 420 indicates an example of calculation of the power consumption amount after the target section of demand control starts, which is calculated by the transmission control unit 131. The reference numeral 420 has also already been explained in FIG. 4, and, therefore, the explanation thereof is omitted here.

Similarly, in FIG. 7, the reference numeral 430 indicates a specific example of the average power consumption per 30 minutes (first power information) stored by the first power information storage unit 132. The reference numeral 430 has also already been explained in FIG. 4, and, therefore, the explanation thereof is omitted here.

On the other hand, in FIG. 7, the reference numeral 710 indicates a specific example of the first power information transmitted to the server device 140 by the transmission control unit 131. As illustrated in the example in FIG. 7, upon receiving a transmission request for the first power information, the transmission control unit 131 transmits the first power information (0 to 138) to the server device 140. As described above, the transmission request includes information to cause the first power information to be transmitted continuously for a certain time period, and the transmission control unit 131 transmits all of the first power information to the server device 140 each time a predetermined number of pieces (for example, six) of the first power information is stored in the first power information storage unit 132 while the certain time period continues.

Specifically, the transmission control unit 131 transmits the first power information (0 to 144) 60 [sec] after the transmission of the first power information (0 to 138). Further, the transmission control unit 131 transmits the first power information (0 to 150) 60 [sec] after the transmission of the first power information (0 to 144). Hereafter, the same processing is repeated while a certain time period continues, and the transmission control unit 131 transmits the first power information (0 to 180) at the end of the target section. If the certain time period continues even after the target section ends, the same processing is repeated in the next target section while the certain time period continues.

### <Flow of power information transmission control processing by edge device>

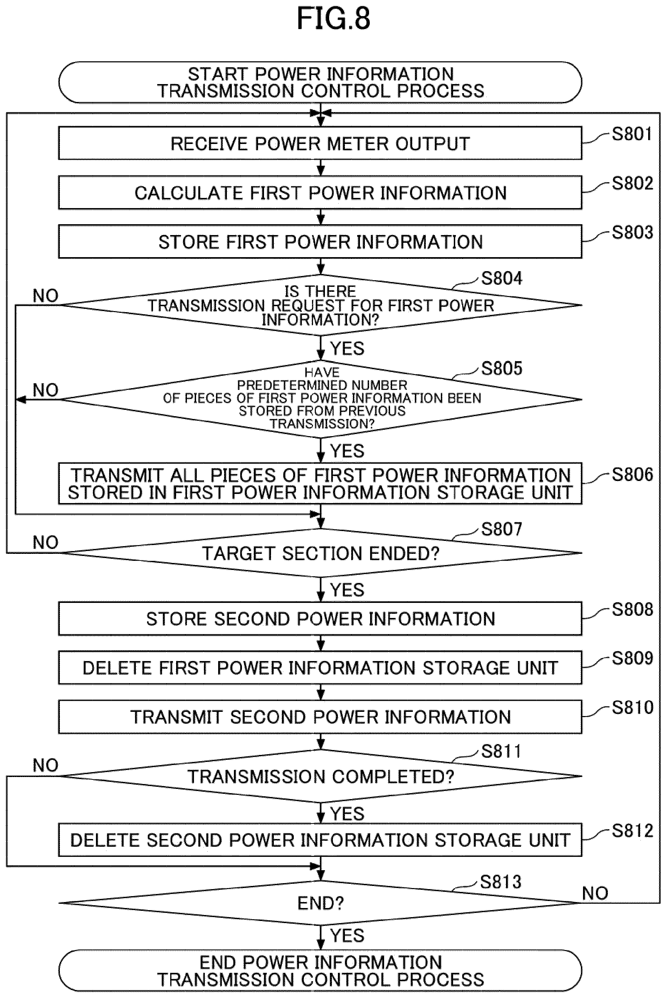

Next, the flow of power information transmission control processing by the edge device 130 will be described. FIG. 8 is a flowchart illustrating the flow of power information transmission control processing by the edge device.

In step S801, the transmission control unit 131 of the edge device 130 receives the power meter output.

In step S802, the transmission control unit 131 of the edge device 130 calculates the power consumption amount after the target section of the demand control starts and converts the power consumption into the average power consumption per 30 minutes to calculate the first power information.

In step S803, the transmission control unit 131 of the edge device 130 stores the calculated first power information in the first power information storage unit 132.

In step S804, the transmission control unit 131 of the edge device 130 determines whether the transmission request for the first power information has been received from the server device 140. When it is determined in step S804 that the transmission request for the first power information has not been received (NO in step S804), the process proceeds to step S807.

On the other hand, when it is determined in step S804 that the transmission request for the first power information has been received (when it is YES in step S804), the process proceeds to step S805.

In step S805, the transmission control unit 131 of the edge device 130 determines whether a predetermined number pieces of first power information have been stored in the first power information storage unit 132 after the last transmission of the first power information to the server device 140.

When it is determined in step S805 that a predetermined number of pieces of first power information have not been stored (NO in step S805), the process proceeds to step S807. On the other hand, when it is determined in step S805 that a predetermined number of pieces of first power information have been stored (YES in step S805), the process proceeds to step S806.

In step S806, the transmission control unit 131 of the edge device 130 transmits all of the first power information stored in the first power information storage unit 132 to the server device 140.

In step S807, the transmission control unit 131 of the edge device 130 determines whether the target section of the demand control has ended.

When it is determined in step S807 that the target section has not ended (NO in step S807), the process returns to step S801. On the other hand, when it is determined in step S807 that the target section has ended (YES in step S807), the process proceeds to step S808.

In step S808, the transmission control unit 131 of the edge device 130 calculates the power consumption from the start to the end of the target section of the demand control, and calculates the second power information by converting the power consumption amount into the average power consumption per 30 minutes. Further, the transmission control unit 131 of the edge device 130 stores the calculated second power information in the second power information storage unit 133.

In step S809, the transmission control unit 131 of the edge device 130 deletes the first power information stored in the first power information storage unit 132.

In step S810, the transmission control unit 131 of the edge device 130 transmits the second power information stored in the second power information storage unit 133 to the server device 140.

In step S811, the transmission control unit 131 of the edge device 130 determines whether the transmission of the second power information to the server device 140 has been completed. When it is determined in step S811 that the transmission has not been completed (NO in step S811), the process proceeds to step S813. On the other hand, when it is determined in step S811 that the transmission has been completed, the second power information stored in the second power information storage unit 133 is deleted (after the lapse of the predetermined period).

In step S813, the transmission control unit 131 of the edge device 130 determines whether to end the power information transmission control processing. When it is determined in step S813 that the power information transmission control processing is not to be ended (NO in step S813), the process returns to step S801.

On the other hand, when it is determined in step S813 that the power information transmission control processing is to be ended (YES in step S813), the power information transmission control processing is ended.

### <Flow of power information display control processing by server device>

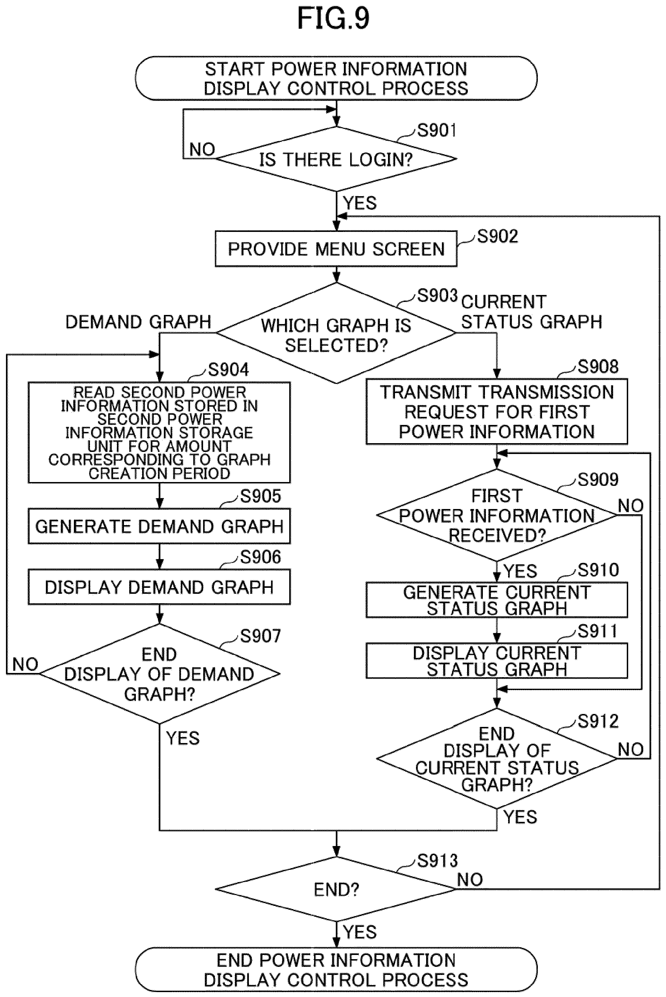

Next, the flow of power information display control processing by the server device 140 will be described. FIG. 9 is a flow chart illustrating the flow of power information display control processing by server device.

In step S901, the display control unit 141 of the server device 140 determines whether login from the user terminal 150 has been accepted. When it is determined in step S901 that no login has been accepted (NO in step S901), the device waits until it is determined that login has been accepted.

On the other hand, when it is determined in step S901 that login has been accepted, the process proceeds to step S902.

In step S902, the display control unit 141 of the server device 140 provides a menu screen to the user terminal 150.

In step S903, the display control unit 141 of the server device 140 determines which graph, a demand graph or a current status graph, has been selected by the user.

When it is determined in step S903 that the demand graph has been selected, the process proceeds to step S904.

In step S904, the display control unit 141 of the server device 140 reads the second power information stored in the second power information storage unit 143 for the graph creation period selected by the user.

In step S905, the display control unit 141 of the server device 140 generates a demand graph based on the second power information for the graph creation period that has been read.

In step S906, the display control unit 141 of the server device 140 transmits the generated demand graph to the user terminal 150 and displays the demand graph on the user terminal 150.

In step S907, the display control unit 141 of the server device 140 determines whether to end the demand graph display. When it is determined in step S907 that the demand graph display is not to be ended (if NO in step S907), the process returns to step S904.

On the other hand, when it is determined in step S907 that the demand graph display is to be ended (YES in step S907), the process proceeds to step S913.

On the other hand, when it is determined in step S903 that the current status graph is selected, the process proceeds to step S908.

In step S908, the display control unit 141 of the server device 140 transmits a transmission request for the first power information to the edge device 130.

In step S909, the display control unit 141 of the server device 140 determines whether the first power information has been received from the edge device 130. When it is determined in step S909 that the first power information has not been received (NO in step S909), the process proceeds to step S912.

On the other hand, when it is determined in step S909 that the first power information has been received (if YES in step S909), the process proceeds to step S910.

In step S910, the display control unit 141 of the server device 140 stores the first power information received from the edge device 130 in the first power information storage unit 142 and generates a current status graph.

In step S911, the display control unit 141 of the server device 140 transmits the generated current status graph to the user terminal 150 and displays the current status graph on the user terminal 150.

In step S912, the display control unit 141 of the server device 140 determines whether to end the current status graph display. When it is determined in step S912 that the current status graph display is not to be ended (NO in step S912), the process returns to step S909.

On the other hand, when it is determined in step S912 that the current status graph display is to be ended (YES in step S912), the process proceeds to step S913.

In step S913, the display control unit 141 of the server device 140 determines whether to end the power information display control processing. When it is determined in step S913 that the power information display control processing is not to be ended (NO in step S913), the process returns to step S902.

On the other hand, when it is determined in step S913 that the power information display control processing is to be ended (YES in step S913), the power information display control processing is ended.

### <Summary>

As described above, in the management system 100 according to the first embodiment, the edge device 130 stores the first power information based on the power consumption amount from the start of the target section of demand control, in the first power information storage unit 132 at every predetermined time interval. In the management system 100 according to the first embodiment, the edge device 130 stores the second power information based on the power consumption amount from the start to the end of the target section of demand control, in the second power information storage unit 133 at the end of the target section. Further, in the management system 100 according to the first embodiment, the edge device 130 transmits the first power information when the edge device 130 receives a request to transmit the first power information from the server device 140, and transmits the second power information at the end of the target section.

Thus, in the management system 100 according to the first embodiment, the first power information is transmitted to the server device when a request to transmit the first power information is received. Thus, according to the management system 100 according to the first embodiment, it becomes possible to reduce the transmission frequency of the first power information. As a result, according to the first embodiment, the communication amount between the edge device and the server device can be reduced as compared with the case where the first power information is transmitted whether or not a transmission request for the first power information is received.

That is, according to the first embodiment, the communication amount between the edge device and the server device can be reduced in the management system for managing power consumption.

### [Second embodiment]

In the first embodiment above, the transmission interval of the power meter output is set to 10 [sec], but the transmission interval of the power meter output is not limited to 10 [sec]. In the first embodiment above, each time a predetermined number of pieces = six of the first power information is stored in the first power information storage unit 132, the first power information is transmitted to the server device 140, but the predetermined number is not limited to "six". Further, in the first embodiment above, the target section of the demand control is 30 minutes, but the target section may be, for example, one hour, which is longer than 30 minutes, or 15 minutes, which is shorter than 30 minutes. That is, the target section of the demand control is not limited to 30 minutes.

Further, in the first embodiment described above, the transmission request for the first power information is described as including information that causes the transmission of the first power information to continue for a certain time period. However, the display of the current status graph may be configured to automatically end at the end of the target section, for example. In this case, the transmission request for the first power information need not include information that causes the first power information to be transmitted continuously for a certain time period.

In the first embodiment, the transmission control unit 131 transmits the second power information to the server device 140 via the network 160 at the end of the target section of demand control. However, the timing when the transmission control unit 131 transmits the second power information is not limited to the end of the target section of demand control. As is clear from the above description, the timing of transmitting the second power information to the server device 140 can be determined by the edge device 130, not by a request from the server device 140. That is, the transmission control unit 131 may transmit the second power information to the server device 140 at a predetermined timing other than the end of the target section of demand control.

### [Reference Signs List]

- 100: : Management system
- 110: : Air conditioners, etc.
- 120: : Power meters
- 130: : Edge devices
- 131: : Transmission control unit
- 140: : Server device
- 141: : Display control unit
- 150: : User terminal
- 510: : Second display screen
- 610: : First display screen

## Claims

1. A management system (100) configured to manage power consumption, comprising:
a server device (140),
an electric power meter (120), and
an edge device (130) communicably connected to the server device (140) through a network (160) and to the electrical power meter (120),
the edge device (130) comprising:
a first storage unit (132) configured to store, at every predetermined time interval, first power information based on a power consumption amount from when a measuring interval starts obtained via a power meter (120);
a second storage unit (133) configured to store, when the measuring interval ends, second power information being an average power consumption amount calculated based on a power consumption amount from when the measuring interval starts and on a power consumption amount when the measuring interval ends obtained via the power meter (120); and
a first control unit (131) configured to transmit all the first power information stored in the first storage unit (132) at every predetermined time interval from when the measuring interval starts in response to receiving a request from the server device (140), and to transmit the second power information at the end of the measuring interval.

2. The management system (100) according to claim 1, wherein
the server device (140) includes: a second control unit (141) configured to transmit the request, in response to determining that a display instruction to display the first power information is given.

3. The management system (100) according to claim 2, wherein the request transmitted by the second control unit (141) includes information to cause the first power information to be continuously transmitted for a predetermined time period.

4. The management system (100) according to claim 2, wherein the second control unit (141) is configured to provide a first display screen configured to display the first power information of the measuring interval, and a second display screen configured to display the second power information of a past predetermined time period.

5. The management system (100) according to claim 1, wherein the first storage unit (132) is configured to delete the first power information every time the measuring interval ends.

6. The management system (100) according to claim 5, wherein
the first control unit (131) is configured to transmits, to the server device (140), all of the first power information stored in the first storage unit (132), in response to determining that the request is received, and
the first control unit (131) is configured to transmit, to the server device (140), all of the first power information stored in the first storage unit (132), every time a predetermined number of pieces of the first power information is newly stored, after the request is received.

7. The management system (100) according to claim 1, wherein the first control unit (131) transmits the second power information when the measuring interval ends.

8. The management system (100) according to claim 6, wherein the server device (140) includes:
a third storage unit (133) configured to store, by overwriting the first power information that has been stored, all of the first power information transmitted by the first control unit (131) every time the predetermined number of pieces of the first power information is newly stored in the first storage unit (132).

9. The management system (100) according to claim 1, wherein
the second storage unit (133) is configured to store the second power information for a predetermined time period in response to determining that the first control unit (131) is unable to transmit the second power information, and
the second storage unit (133) is configured to delete the second power information in response to determining that the first control unit (131) has completed transmitting the second power information.

10. A management method performed in a management system (100) according to any one of claims 1 to 9, the management method comprising:
a first storage step of storing (S803), in the first storage unit at every predetermined time interval, first power information based on a power consumption amount from when a measuring interval starts;
a second storage step of storing (S808), in the second storing unit when the measuring interval ends, second power information being an average power consumption amount calculated based on a power consumption amount from when the measuring interval starts and on a power consumption amount when the measuring interval ends; and
a control step of transmitting (S806) the first power information in response to receiving a request from the server device, and (S810) to transmit the second power information at the end of the measuring interval.

## Patentansprüche

1. Verwaltungssystem (100), das konfiguriert ist, um den Stromverbrauch zu verwalten, umfassend:
eine Servervorrichtung (140),
einen Stromzähler (120), und
eine Edge-Vorrichtung (130), die mit der Servervorrichtung (140) über ein Netzwerk (160) und mit dem Stromzähler (120) kommunikativ verbunden ist,
wobei die Edge-Vorrichtung (130) umfasst:
eine erste Speichereinheit (132), die konfiguriert ist, um in jedem vorbestimmten Zeitintervall erste Strominformationen basierend auf einer Stromverbrauchsmenge ab dem Start eines Messintervalls, das über einen Stromzähler (120) erhalten wird, zu speichern;
eine zweite Speichereinheit (133), die konfiguriert ist, um, wenn das Messintervall endet, zweite Strominformationen zu speichern, die eine durchschnittliche Stromverbrauchsmenge sind, die basierend auf einer Stromverbrauchsmenge ab dem Start des Messintervalls und auf einer Stromverbrauchsmenge ab dem Ende des Messintervalls, die über den Stromzähler (120) erhalten wird, berechnet wird; und
eine erste Steuereinheit (131), die konfiguriert ist, um alle ersten Strominformationen, die in der ersten Speichereinheit (132) gespeichert sind, in jedem vorbestimmten Zeitintervall ab dem Start des Messintervalls als Reaktion auf den Empfang einer Anforderung von der Servervorrichtung (140) zu übertragen und die zweiten Strominformationen am Ende des Messintervalls zu übertragen.

2. Verwaltungssystem (100) nach Anspruch 1, wobei
die Servervorrichtung (140) Folgendes umfasst: eine zweite Steuereinheit (141), die konfiguriert ist, um die Anforderung als Reaktion auf das Bestimmen, dass eine Anzeigeanweisung zum Anzeigen der ersten Strominformationen gegeben ist, zu übertragen.

3. Verwaltungssystem (100) nach Anspruch 2, wobei die von der zweiten Steuereinheit (141) übertragene Anforderung Informationen umfasst, um zu bewirken, dass die ersten Strominformationen für einen vorbestimmten Zeitraum kontinuierlich übertragen werden.

4. Verwaltungssystem (100) nach Anspruch 2, wobei die zweite Steuereinheit (141) konfiguriert ist, um einen ersten Anzeigebildschirm, der konfiguriert ist, um die ersten Strominformationen des Messintervalls anzuzeigen, und einen zweiten Anzeigebildschirm, der konfiguriert ist, um die zweiten Strominformationen eines vergangenen vorbestimmten Zeitraums anzuzeigen, bereitzustellen.

5. Verwaltungssystem (100) nach Anspruch 1, wobei die erste Speichereinheit (132) konfiguriert ist, um die ersten Strominformationen jedes Mal zu löschen, wenn das Messintervall endet.

6. Verwaltungssystem (100) nach Anspruch 5, wobei
die erste Steuereinheit (131) konfiguriert ist, um alle ersten Strominformationen, die in der ersten Speichereinheit (132) gespeichert sind, als Reaktion auf das Bestimmen, dass die Anforderung empfangen wird, an die Servervorrichtung (140) zu übertragen, und
die erste Steuereinheit (131) konfiguriert ist, um alle ersten Strominformationen, die in der ersten Speichereinheit (132) gespeichert sind, jedes Mal, wenn eine vorbestimmte Anzahl von Teilen der ersten Strominformationen neu gespeichert ist, nach dem Empfang der Anforderung an die Servervorrichtung (140) zu übertragen.

7. Verwaltungssystem (100) nach Anspruch 1, wobei die erste Steuereinheit (131) die zweiten Strominformationen überträgt, wenn das Messintervall endet.

8. Verwaltungssystem (100) nach Anspruch 6, wobei die Servervorrichtung (140) Folgendes umfasst:
eine dritte Speichereinheit (133), die konfiguriert ist, um durch Überschreiben der ersten Strominformationen, die gespeichert wurden, alle ersten Strominformationen zu speichern, die von der ersten Steuereinheit (131) jedes Mal übertragen werden, wenn die vorbestimmte Anzahl von Teilen der ersten Strominformationen in der ersten Speichereinheit (132) neu gespeichert ist.

9. Verwaltungssystem (100) nach Anspruch 1, wobei
die zweite Speichereinheit (133) konfiguriert ist, um die zweiten Strominformationen für einen vorbestimmten Zeitraum als Reaktion auf das Bestimmen, dass die erste Steuereinheit (131) nicht in der Lage ist, die zweiten Strominformationen zu übertragen, zu speichern, und
die zweite Speichereinheit (133) konfiguriert ist, um die zweiten Strominformationen als Reaktion auf das Bestimmen, dass die erste Steuereinheit (131) das Übertragen der zweiten Strominformationen abgeschlossen hat, zu löschen.

10. Verwaltungsverfahren, das in einem Verwaltungssystem (100) nach einem der Ansprüche 1 bis 9 durchgeführt wird, wobei das Verwaltungsverfahren umfasst:
einen ersten Speicherschritt des Speicherns (S803), in der ersten Speichereinheit in jedem vorbestimmten Zeitintervall, von ersten Strominformationen basierend auf einer Stromverbrauchsmenge ab dem Start eines Messintervalls;
einen zweiten Speicherschritt des Speicherns (S808), in der zweiten Speichereinheit, wenn das Messintervall endet, von zweiten Strominformationen, die eine durchschnittliche Stromverbrauchsmenge sind, die basierend auf einer Stromverbrauchsmenge ab dem Start des Messintervalls und auf einer Stromverbrauchsmenge ab dem Ende des Messintervalls berechnet wird; und
einen Steuerschritt des Übertragens (S806) der ersten Strominformationen als Reaktion auf den Empfang einer Anforderung von der Servervorrichtung und (S810) des Übertragens der zweiten Strominformationen am Ende des Messintervalls.

## Revendications

1. Système de gestion (100) configuré pour gérer la consommation d'énergie, comportant :
un dispositif serveur (140),
un mesureur de puissance électrique (120), et
un dispositif périphérique (130) connecté de manière à pouvoir communiquer avec le dispositif serveur (140) par l'intermédiaire d'un réseau (160) et avec le mesureur de puissance électrique (120),
le dispositif périphérique (130) comportant :
une première unité de stockage (132) configurée pour stocker, à chaque intervalle de temps prédéterminé, des premières informations de puissance sur la base d'une quantité de consommation d'énergie à partir du moment où un intervalle de mesure commence, quantité qui est obtenue par le biais d'un mesureur de puissance (120) ;
une deuxième unité de stockage (133) configurée pour stocker, quand l'intervalle de mesure se termine, des deuxièmes informations de puissance qui sont une quantité de consommation d'énergie moyenne calculée sur la base d'une quantité de consommation d'énergie à partir du moment où l'intervalle de mesure commence et d'une quantité de consommation d'énergie quand l'intervalle de mesure se termine, quantités qui sont obtenues par le biais du mesureur de puissance (120) ; et
une première unité de commande (131) configurée pour transmettre toutes les premières informations de puissance stockées dans la première unité de stockage (132) à chaque intervalle de temps prédéterminé à partir du moment où l'intervalle de mesure commence en réponse à la réception d'une demande en provenance du dispositif serveur (140), et pour transmettre les deuxièmes informations de puissance à la fin de l'intervalle de mesure.

2. Système de gestion (100) selon la revendication 1, dans lequel
le dispositif serveur (140) comprend : une deuxième unité de commande (141) configurée pour transmettre la demande, en réponse à la détermination comme quoi une instruction d'affichage servant à afficher les premières informations de puissance est donnée.

3. Système de gestion (100) selon la revendication 2, dans lequel la demande transmise par la deuxième unité de commande (141) comprend des informations servant à amener les premières informations de puissance à être transmises en continu pendant une période de temps prédéterminée.

4. Système de gestion (100) selon la revendication 2, dans lequel la deuxième unité de commande (141) est configurée pour fournir un premier écran d'affichage configuré pour afficher les premières informations de puissance de l'intervalle de mesure, et un deuxième écran d'affichage configuré pour afficher les deuxièmes informations de puissance d'une période de temps prédéterminée passée.

5. Système de gestion (100) selon la revendication 1, dans lequel la première unité de stockage (132) est configurée pour supprimer les premières informations de puissance à chaque fois que l'intervalle de mesure se termine.

6. Système de gestion (100) selon la revendication 5, dans lequel
la première unité de commande (131) est configurée pour transmettre, au dispositif serveur (140), toutes les premières informations de puissance stockées dans la première unité de stockage (132), en réponse à la détermination comme quoi la demande est reçue, et
la première unité de commande (131) est configurée pour transmettre, au dispositif serveur (140), toutes les premières informations de puissance stockées dans la première unité de stockage (132), à chaque fois qu'un nombre prédéterminé d'éléments des premières informations de puissance sont nouvellement stockés, une fois que la demande a été reçue.

7. Système de gestion (100) selon la revendication 1, dans lequel la première unité de commande (131) transmet les deuxièmes informations de puissance quand l'intervalle de mesure se termine.

8. Système de gestion (100) selon la revendication 6, dans lequel le dispositif serveur (140) comprend :
une troisième unité de stockage (133) configurée pour stocker, par écrasement des premières informations de puissance qui ont été stockées, toutes les premières informations de puissance transmises par la première unité de commande (131) à chaque fois que le nombre prédéterminé d'éléments des premières informations de puissance sont nouvellement stockés dans la première unité de stockage (132).

9. Système de gestion (100) selon la revendication 1, dans lequel
la deuxième unité de stockage (133) est configurée pour stocker les deuxièmes informations de puissance pendant une période de temps prédéterminée en réponse à la détermination comme quoi la première unité de commande (131) est incapable de transmettre les deuxièmes informations de puissance, et
la deuxième unité de stockage (133) est configurée pour supprimer les deuxièmes informations de puissance en réponse à la détermination comme quoi la première unité de commande (131) a terminé la transmission des deuxièmes informations de puissance.

10. Procédé de gestion effectué dans un système de gestion (100) selon l'une quelconque des revendications 1 à 9, le procédé de gestion comportant :
une première étape de stockage consistant à stocker (S803), dans la première unité de stockage à chaque intervalle de temps prédéterminé, des premières informations de puissance sur la base d'une quantité de consommation d'énergie à partir du moment où un intervalle de mesure commence ;
une deuxième étape de stockage consistant à stocker (S808), dans la deuxième unité de stockage quand l'intervalle de mesure se termine, des deuxièmes informations de puissance qui sont une quantité de consommation d'énergie moyenne calculée sur la base d'une quantité de consommation d'énergie à partir du moment où l'intervalle de mesure commence et d'une quantité de consommation d'énergie quand l'intervalle de mesure se termine ; et
une étape de commande consistant à transmettre (S806) les premières informations de puissance en réponse à la réception d'une demande en provenance du dispositif serveur, et (S810) à transmettre les deuxièmes informations de puissance à la fin de l'intervalle de mesure.
